# EUROPÄISCHE PATENTSCHRIFT

(11) **EP 3 533 142 B1**
(45) Veröffentlichungstag und Bekanntmachung des Hinweises auf die Patenterteilung: **11.05.2022**
(21) Anmeldenummer: 17816614.6
(22) Anmeldetag: 06.12.2017
(51) Int. Cl.: H02P 1/16, H02P 1/26, H02P 29/60, H02P 23/14, H02P 1/02

(54) **VERFAHREN UND VORRICHTUNG ZUM RECHNERGESTÜTZTEN BETRIEB EINES ELEKTROMOTORS**
METHOD AND DEVICE FOR OPERATING AN ELECTRIC MOTOR WITH THE SUPPORT OF A COMPUTER
PROCÉDÉ ET DISPOSITIF DE FONCTIONNEMENT ASSISTÉ PAR ORDINATEUR D'UN MOTEUR ÉLECTRIQUE

(30) Priorität: 16.12.2016 EP 16204640
(43) Veröffentlichungstag der Anmeldung: 04.09.2019
(73) Patentinhaber: Siemens Aktiengesellschaft, 80333 München (DE)
(72) Erfinder: MITTELSTÄDT, Sebastian, 81541 München-Haidhausen (DE); MLYNEK, Jonas, 10965 Berlin (DE); WEBER, Stefan Hagen, 81927 München (DE)
(86) Internationale Anmeldenummer: PCT/EP2017/081614
(87) Internationale Veröffentlichungsnummer: WO 2018/108651

(56) Entgegenhaltungen:
- EP-A1- 3 002 871
- DE-A1-102009 001 258
- DE-A1-102010 063 148
- US-B1- 9 496 817

## Beschreibung

Die Erfindung betrifft ein Verfahren und eine Vorrichtung zum rechnergestützten Betrieb eines Elektromotors, der während seines Betriebs einer thermischen Belastung durch die Drehbewegung seines Rotors ausgesetzt ist. Insbesondere beziehen sich das Verfahren und die Vorrichtung auf die Bestimmung einer Zeitinformation zum Neustart des Elektromotors. Die Erfindung betrifft zudem ein zugehöriges Computerprogrammprodukt und ein computerlesbares Medium.

Gerade bei großen Antrieben, deren Rotoren beim Anfahren hohen thermischen Belastungen ausgesetzt sind, ist es sehr wichtig, die Temperatur des drehenden Rotors zu kontrollieren, um eine Schädigung durch Überhitzung zu vermeiden. Gerade große Antriebe, etwa für die Gas-, Öl- oder Chemieindustrie, sind besonders kritisch. Hier werden häufig sog. Schenkelpolmotoren als Antrieb eingesetzt, die beim asynchronen Anfahren kurzzeitig viel Wärme erzeugen. Wird so ein Motor mehrmals hintereinander gestartet, dann entstehen in seinem Inneren schnell sehr hohe Temperaturen. Wird ein Elektromotor zu häufig gestartet, droht eine dauerhafte Beschädigung des Elektromotors. Daher müssen zwischen dem Ausschalten des Motors und dem neuen Hochfahren Abkühlzeiten eingehalten werden. Die Temperaturen in den kritischen Bereichen im Inneren des Motors lassen sich technisch nicht direkt messen. Ein Messen der Temperatur im Motorinneren ist hierbei, wenn überhaupt, nur mit sehr großem Aufwand möglich. Die erforderliche Abkühlzeit wird daher bislang konservativ ermittelt, um eine thermische Schädigung des Antriebs sicher auszuschließen. Oftmals sind die Abkühlzeiten so deutlich länger, als es aus technischen Gründen notwendig wäre.

Während der Entwicklung der Motoren entstehen in der Regel CAD-Modelle. Ausgehend von solchen Modellen können mathematisehe Modelle aufgestellt werden, die die Geometrie und das Material des Motors erfassen, um die Eigenschaften der Antriebe zu bestimmen. Es werden in der Regel datenbasierte Verfahren verwendet, um auf die erforderlichen Ruhezeiten des Motors schließen zu können. Solche Modelle sind jedoch komplex, so dass diese in Echtzeit nicht oder nur schwer gerechnet werden können.

Für jeden Antrieb sind daher von dessen Hersteller Zeitabstände für Neustarts definiert, welche sicherstellen, dass bei deren Einhaltung keine Überhitzung des Antriebs auftreten kann.

Bei der Nutzung von mathematischen Modellen, welche den frühest möglichen Zeitpunkt für einen Neustart des Antriebs berechnen, müssen sämtliche Modellösungen mit deren Unsicherheiten berücksichtigt werden. Eine Simulation führt zu sehr vielen Lösungen. Diese sind zur Ausgabe und Interaktion mit einem Nutzer daher nur wenig tauglich. Darüber hinaus lassen solche mathematischen Modelle Erfahrungswerte außer Acht, so dass für den frühest möglichen Zeitpunkt für einen Neustart des Antriebs häufig nicht optimale Einschaltzeitpunkte ermittelt werden.

Die EP 3 002 871 A1 offenbart ein Verfahren zum rechnergestützten Betrieb eines Elektromotors, der während seines Betriebs einer thermischen Belastung durch die Drehbewegung seines Rotors ausgesetzt ist. Während des Betriebs des Elektromotors werden Messdaten empfangen. Es erfolgt das Ermitteln wenigstens eines an einen fiktiven Realwert angenäherten Temperaturwerts mittels eines aus der vorgebbaren Motorgeometrie abgeleiteten mathematischen Modells für physikalische Größen des Gesamtzustands des Motors sowie aus den empfangenen Messdaten als Eingabedaten. Es folgt das Prognostizieren einer Anzahl von Temperaturverläufen mit Neustartzeitpunkten, wobei die Temperaturverläufe jeweils vom Gesamtzustand des Elektromotors und/oder von der Konfiguration des Elektromotors abhängig sind, zur Definition eines Abkühlzeitraums zur Reduzierung der thermischen Belastung des Elektromotors, wobei der angenäherte Temperaturwert, der aus dem wenigstens einen fiktiven Realwert resultiert, als jeweiliger Startwert für einen Neustart in den zu prognostizierenden Temperaturverlauf eingeht. Dadurch bestimmt dieses Verfahren die Dauer einer Abkühlpause eines Elektromotors anhand einer Temperaturmessung und einem Modell.

Die DE 10 2009 001 258 A1 offenbart ein Verfahren zum rechnergestützten Betrieb eines Elektromotors, der während seines Betriebs einer thermischen Belastung durch die Drehbewegung seines Rotors ausgesetzt ist. Während des Betriebs des Elektromotors gemessene Messdaten werden empfangen, wobei die Messdaten elektrische und/oder kinetische physikalische Größen des Elektromotors sind. Es erfolgt das Ermitteln wenigstens eines an einen fiktiven Realwert angenäherten Temperaturwertes mittels eines aus einer vorgebbaren Motorgeometrie abgeleiteten mathematischen Modells für physikalische Größen des Gesamtzustandes des Motors sowie aus den empfangenen Messdaten als Eingabedaten. Anschließend wird ein Temperaturverlauf visualisiert. Es wird somit die Motortemperatur mittels einer Motor-Spannung, einem Motor-Strom sowie der Drehzahl und einem Modell bestimmt. Zur thermischen Entlastung wird der Elektromotor für eine begrenzte Zeit ausgeschaltet. Der aktuelle thermische Zustand wird angezeigt.

Die US 9 496 817 B1 offenbart ein Verfahren zum rechnergestützten Betrieb eines Elektromotors, der während seines Betriebs einer thermischen Belastung durch die Drehbewegung seines Rotors ausgesetzt ist. Es werden während des Betriebs des Elektromotors gemessene Messdaten empfangen, wobei die Messdaten elektrische und/oder kinetische physikalische Größen des Elektromotors sind. Es erfolgt das Ermitteln wenigstens eines an einen fiktiven Realwert angenäherten Temperaturwertes mittels eines aus einer vorgebbaren Motorgeometrie abgeleiteten mathematischen Modells für physikalische Größen des Gesamtzustandes des Motors sowie aus den empfangenen Messdaten als Eingabedaten. Eine Anzahl von Temperaturen wird prognostiziert, wobei die Temperaturen jeweils vom Gesamtzustand des Elektromotors und/oder von der Konfiguration des Elektromotors abhängig sind. Dadurch erfolgt die Berechnung von zukünftigen thermischen Entwicklungen im Elektromotor.

Die DE 10 2010 063 148 A1 offenbart ein Verfahren zum rechnergestützten Betrieb eines Elektromotors, der während seines Betriebs einer thermischen Belastung durch die Drehbewegung seines Rotors ausgesetzt ist. Während des Betriebs des Elektromotors gemessene Messdaten werden empfangen, wobei die Messdaten elektrische und/oder kinetische physikalische Größen des Elektromotors sind. Es erfolgt das Ermitteln wenigstens eines an einen fiktiven Realwert angenäherten Temperaturwertes mittels eines aus einer vorgebbaren Motorgeometrie abgeleiteten mathematischen Modells für physikalische Größen des Gesamtzustandes des Motors sowie aus den empfangenen Messdaten als Eingabedaten. Weiter erfolgt die Bestimmung einer Abschaltzeitdauer. Dadurch wird die Temperatur des Elektromotors mittels seines Motorstroms, der Drehzahl, einem Pulsweitenmodulations-Verhältnis und einer Akkumulatorspannung, aus der sich eine Motorspannung berechnen lässt, ermittelt. Eine Abschaltzeitdauer und die Temperatur des Elektromotors werden erst beim Wiedereinschalten des Elektromotors ermittelt.

Es ist Aufgabe der Erfindung, ein Verfahren und eine Vorrichtung anzugeben, das bzw. die die Bestimmung einer Information zum Neustart eines elektrischen Antriebs mit größerer Präzision ermöglichen.

Diese Aufgaben werden gelöst durch ein Verfahren gemäß den Merkmalen des Patentanspruches 1, ein Computerprogrammprodukt gemäß den Merkmalen des Patentanspruches 14 und eine Vorrichtung gemäß den Merkmalen des Patentanspruches 15. Vorteilhafte Ausgestaltungen ergeben sich aus den abhängigen Patentansprüchen.

Zur Lösung der Aufgabe wird ein Verfahren zum rechnergestützten Betrieb eines Elektromotors vorgeschlagen. Der Elektromotor ist während seines Betriebs einer thermischen Belastung durch die Drehbewegung seines Rotors ausgesetzt. Das Verfahren umfasst die folgenden Schritte:
- Empfangen von während des Betriebs des Elektromotors gemessenen Messdaten, wobei die Messdaten elektrische und/oder kinetische physikalische Größen des Elektromotors sind. Insbesondere werden als elektrische und/oder kinetische physikalische Größen des Elektromotors direkt gemessene Temperaturen, Drehzahlen, auftretende Kräfte des Rotors empfangen.
- Ermitteln wenigstens eines an einen fiktiven Realwert angenäherten Temperaturwerts mittels eines aus einer vorgebbaren Motorgeometrie abgeleiteten mathematischen Modells für physikalische Größen des Gesamtzustands des Motors sowie aus den empfangenen Messdaten als Eingabedaten. Gemäß diesem Schritt werden zusätzlich zu den empfangenen elektrischen und/oder kinetischen physikalischen Größen sog. Soft-Sensorwerte, die aus direkt gemessenen oder anderen Sensorwerten abgeleitet sind, und/oder Prognosen ermittelt. Prognosen können beispielsweise mittels einer Simulation von möglichen zukünftigen Szenarien ermittelt werden.
- Prognostizieren einer Anzahl von Temperaturverläufen mit unterschiedlichen Neustartzeitpunkten, wobei die Temperaturverläufe jeweils vom Gesamtzustand des Elektromotors und/oder von der Konfiguration des Elektromotors abhängig sind, zur Definition eines Abkühlzeitraums zur Definition der thermischen Belastung des Elektromotors, wobei der angenäherte Temperaturwert, der aus dem wenigstens einen fiktiven Realwert resultiert, als jeweiliger Startwert für einen Neustart in den zu prognostizierenden Temperaturverlauf eingeht. Als Abkühlzeitraum wird in diesem Zusammenhang ein Zeitraum zwischen dem Beginn der Prognose und dem jeweiligen Neustartzeitpunkt verstanden. Anhand der prognostizierten Anzahl von Temperaturverläufen kann für verschiedene Neustartzeitpunkte die daraus resultierende thermische Belastung bestimmt werden.

- Visualisierung des in der Vergangenheit liegenden Temperaturverlaufs zusammen mit der Anzahl an prognostizierten Temperaturverläufen in einem Zeit-Temperatur-Diagramm, wobei die Anzahl an prognostizierten Temperaturverläufen einen möglichen Neustart des Elektromotors zum jeweiligen Neustartzeitpunkt mit dem jeweils ermittelten Startwert repräsentiert. Der in der Vergangenheit liegende Temperaturverlauf kann beispielsweise aus den elektrischen und/oder kinetischen physikalischen Größen des Elektromotors und/oder den oben erwähnten Soft-Sensorwerten bestimmt werden.
- Ermittlung eines jeweiligen Gütemaßes für die Anzahl an prognostizierten Temperaturverläufen, wobei das Gütemaß ein Maß für die Effizienz dafür ist, wie gut der Neustartzeitpunkt im Hinblick auf die zu erwartende thermische Belastung und einem Minimum des Abkühlzeitraums ist.
- Abbilden der Gütemaße auf eine Farbskala, welche auf einer Nutzerschnittstelle visuell ausgegeben wird, wobei in Antwort auf eine über die Nutzerschnittstelle eingegebene Nutzerinteraktion eine Zeitinformation zum Neustart des Elektromotors ausgegeben wird.

Die Ermittlung eines jeweiligen Gütemaßes für die Anzahl an prognostizierten Temperaturverläufen und deren Abbildung auf eine Farbskala ermöglicht es auf einfache Weise, mit einem Lösungsraum zu interagieren. Insbesondere können Prognoseunsicherheiten und Prognosewerte ohne Informationsverlust auf der Farbskala visualisiert werden. Dies ermöglicht eine fehlerfreie Interaktion und einen effizienten Betrieb des Elektromotors.

Die Visualisierung der Gütemaße auf einer Farbskala und die Auswertung einer über die Nutzerschnittstelle eingegebenen Nutzerinteraktion ermöglichen schnelle und effiziente Lösungsfindungen, um einen im Hinblick auf die thermische Belastbarkeit und die Dauer der Abkühlzeit optimalen Neustartzeitpunkt zu ermitteln.

Die Verwendung eines Gütemaßes und deren Abbildung auf eine Farbskala erleichtert die Bestimmung der Güte der Bestimmung des Neustartzeitpunkts. Bei zu geringer Sicherheit über einen korrekten Neustartzeitpunkt können in Antwort auf eine über die Nutzerschnittstelle eingegebene Nutzerinteraktion weitere Berechnungen bis zur optimalen Lösungsfindung durchgeführt werden.

Die Nutzung einer Farbskala zur Darstellung eines möglichen Lösungsraums ermöglicht die schnelle und präzise Ermittlung eines nächsten Neustartzeitpunkts und ist insbesondere in der Lage, eine jeweilige Unsicherheit zu bewerten.

Die Zeitinformation zum Neustart des Elektromotors kann unmittelbar an eine angeschlossene Steuereinheit zur Steuerung des Elektromotors übertragen werden.

Eine Weiterbildung des Verfahrens sieht vor, dass für jeden prognostizierten Temperaturverlauf ein erwarteter Temperaturverlauf, ein erster Temperaturverlauf mit einer oberen Konfidenzgrenze und ein zweiter Temperaturverlauf mit einer unteren Konfidenzgrenze ermittelt werden. Der erste und der zweite Temperaturverlauf werden z.B. mit Hilfe eines Unsicherheitsschätzers ermittelt. Durch den zwischen dem ersten Temperaturverlauf und dem zweiten Temperaturverlauf gebildeten Abstand wird ein Erwartungsband (sog. Prognosebereich) gebildet, innerhalb dem der erwartete Temperaturverlauf im schlechtesten bzw. im besten Fall liegt.

In der Visualisierung der prognostizierten Temperaturverläufe werden die jeweiligen erwarteten Temperaturverläufe dargestellt, solange keine Nutzerinteraktion ermittelt wird oder wurde. Beim Feststellen einer Interaktion, welche eine Auswahl eines der prognostizierten Temperaturverläufe umfasst, werden in der Visualisierung dessen erwarteter Temperaturverlauf, dessen erster Temperaturverlauf und dessen zweiter Temperaturverlauf dargestellt. Die unterschiedliche Visualisierungen ohne und mit einer Interaktion ermöglichen einerseits eine übersichtliche Darstellung der prognostizierten Temperaturverläufe und andererseits eine präzise Ausgabe des Erwartungsbands für einen jeweils durch eine Nutzerinteraktion ausgewählten prognostizierten Temperaturverlauf.

Eine Weiterbildung des Verfahrens sieht vor, dass eine obere Temperaturschranke, die eine Hardwaregrenze des Elektromotors repräsentiert, und eine untere Temperaturschranke, die eine Grenze für einen effizienten Betrieb des Elektromotors ist, festgelegt werden, wobei die jeweiligen Gütemaße für die Anzahl an prognostizierten Temperaturverläufen abhängig von der festgelegen oberen und unteren Temperaturschranke ermittelt werden.

Die obere und untere Temperaturschranke werden gemäß einer Weiterbildung des Verfahrens in der Visualisierung angezeigt und sind durch eine Nutzerinteraktion in ihrem Betrag veränderbar. Hierdurch lässt sich beispielsweise der Neustartzeitpunkt dadurch beeinflussen, dass die obere Temperaturschranke aufgrund von Erfahrungswerten durch eine Nutzerinteraktion in gewissen Grenzen angepasst wird. Mittels der unteren Temperaturschranke kann die Effizienz des Betriebs des Elektromotors beeinflusst werden. Allgemein kann durch einen größeren Abstand zwischen oberer und unterer Temperaturschranke die Effizienz des Betriebs des Elektromotors erhöht und die rechnergestützte Lösungsfindung erleichtert werden. Die Anpassung der unteren Temperaturschranke kann dabei ebenfalls basierend auf Erfahrungswerten eines Nutzers durch eine Nutzerinteraktion in passender Wiese beeinflusst werden.

Eine andere Weiterbildung des Verfahrens sieht vor, dass die Anzahl der prognostizierten Temperaturverläufe durch eine Nutzerinteraktion festgelegt wird. Durch die Anzahl der prognostizierten Temperaturverläufe und deren Ausgabe in der Visualisierung kann die Geschwindigkeit des Auffindens einer Lösung zur Bestimmung eines optimalen Neustartzeitpunkts positiv beeinflusst werden.

Es kann weiterhin vorgesehen sein, dass für einen jeweiligen prognostizierten Temperaturverlauf ein Prognosebereich für die Temperatur ermittelt wird, indem die Differenz eines jeweiligen Temperaturmaximums für den ersten und den zweiten Temperaturverlauf, das beim angenommenen Ausschalten des Elektromotors erreicht ist, ermittelt wird.

Der Prognosebereich ragt in einen oder mehrere der folgenden Bereiche oder liegt in diesen:
- einen oberen Bereich, der oberhalb der oberen Temperaturschranke liegt,
- einen mittleren Bereich, der zwischen der oberen und der unteren Temperaturschranke liegt,
- einen unteren Bereich, der unterhalb der unteren Temperaturschranke liegt.

Dabei bestimmt sich das Gütemaß aus den jeweiligen Anteilen der Überlappung des Prognosebereichs mit dem oberen Bereich und/oder dem mittleren Bereich und/oder dem unteren Bereich.

Eine weitere Ausgestaltung sieht vor, dass dem oberen, dem mittleren und dem unteren Bereich jeweils eine Farbe eines vorgegebenen Farbraums zugewiesen ist, wobei die jeweiligen Farben vorgegebene, insbesondere reine, Farben eines Kreiswinkels des vorgegebenen Farbraums sind. Als Farbraum kann beispielsweise der Farbraum HSI genutzt werden. Grundsätzlich eignet sich auch jeder andere bekannte oder definierte Farbraum zur Realisierung des Verfahrens. Der Farbraum kann beispielsweise in bekannter Weise in Kreisform dargestellt sein, wobei der Kreiswinkel die auf dem kreisförmigen Rand des Farbraums liegenden Farben umfasst.

Insbesondere ist dabei vorgesehen, dass das Gütemaß eine Mischfarbe des Kreiswinkels des vorgegebenen Farbraums ist.

Die Mischfarbe des Gütemaßes ergibt sich durch die Ermittlung, mit welchem Anteil der Prognosebereich in dem oberen und/oder dem mittleren und/oder dem unteren Bereich liegt. Je nach gewähltem Abstand zwischen oberer und unterer Temperaturschranke kann der Prognosebereich auch nur in dem oberen und mittleren oder in dem mittleren und unteren oder ausschließlich in dem oberen oder ausschließlich in dem mittleren oder ausschließlich in dem unteren Bereich liegen.

Eine weitere Ausgestaltung sieht vor, dass in der Farbskala der Bereich zwischen zwei benachbarten Gütemaßen ein Farbverlauf ist, der sich aus den Farben einer kürzesten Verbindung der auf dem Farbwinkel des vorgegebenen Farbraums liegenden Mischfarben des Farbraums ergibt. Je nachdem, über welche Farben die kürzeste Verbindung zwischen zwei benachbarten Gütemaßen verläuft, ergibt sich ein eher reiner (gesättigter) oder eher ein ungesättigter Farbverlauf. Anhand des Farbverlaufs und der Sättigung der Farben kann visuell, ebenso wie rechnergestützt, auf die Eignung eines Temperaturverlaufs für den nächsten Neustart geschlossen werden. Die Mischfarbe, insbesondere deren Reinheit bzw. Sättigung gibt somit darüber Auskunft, wie geeignet ein bestimmter prognostizierter Temperaturverlauf für einen Neustart ist.

Es ist somit gemäß einer weiteren Ausgestaltung vorgesehen, dass die Zeitinformation zum Neustart des Elektromotors anhand der Farbsättigung der Farbe des mittleren Bereichs bestimmt wird.

Die Erfindung schlägt ferner ein Computerprogramm mit Mitteln zur Durchführung des oben und nachfolgend beschriebenen Verfahrens vor, wenn das Computerprogramm auf einer Vorrichtung oder in Mitteln der Vorrichtung der nachfolgend beschriebenen Art zur Ausführung gebracht wird.

Gemäß einer weiteren Ausgestaltung schlägt die Erfindung eine Vorrichtung zum rechnergestützten Betrieb eines Elektromotors vor, der während seines Betriebs einer thermischen Belastung durch die Drehbewegung seines Rotors ausgesetzt ist. Die Vorrichtung umfasst zumindest eine Steuereinheit und eine Nutzerschnittstelle. Die Steuereinheit ist dazu ausgebildet
- von während des Betriebs des Elektromotors gemessene Messdaten zu empfangen, wobei die Messdaten elektrische und/oder kinetische physikalische Größen des Elektromotors sind;
- wenigstens einen an einen fiktiven Realwert angenäherten Temperaturwert zu ermitteln mittels eines aus einer vorgebbaren Motorgeometrie abgeleiteten mathematischen Modells für physikalische Größen des Gesamtzustands des Motors sowie aus den empfangenen Messdaten als Eingabedaten;
- eine Anzahl von Temperaturverläufen mit unterschiedlichen Neustartzeitpunkten zu prognostizieren, wobei die Temperaturverläufe jeweils vom Gesamtzustand des Elektromotors und/oder von der Konfiguration des Elektromotors abhängig sind, zur Definition eines Abkühlzeitraums zur Reduzierung der thermischen Belastung des Elektromotors, wobei der angenäherte Temperaturwert, der aus dem wenigstens einen fiktiven Realwert resultiert, als jeweiliger Startwert für einen Neustart in den zu prognostizierenden Temperaturverlauf eingeht;
- ein jeweiliges Gütemaß für die Anzahl an prognostizierten Temperaturverläufen zu ermitteln, wobei das Gütemaß ein Maß für die Effizienz dafür ist, wie gut der Neustartzeitpunkt im Hinblick auf die zu erwartende thermische Belastung und einem Minimum des Abkühlzeitraums ist; und
- die Gütemaße auf einer Farbskala abzubilden.

Die Nutzerschnittstelle ist dazu ausgebildet,
- den in der Vergangenheit liegenden Temperaturverlauf zusammen mit der Anzahl an prognostizierten Temperaturverläufen in einem Zeit-Temperatur-Diagramm zu visualisieren, wobei die Anzahl an prognostizierten Temperaturverläufen einen möglichen Neustart des Elektromotors zum jeweiligen Neustartzeitpunkt mit dem jeweils ermittelten Startwert repräsentiert; und
- die Farbskala auf der Nutzerschnittstelle visuell auszugeben und in Antwort auf eine über die Nutzerschnittstelle angegebene Nutzerinteraktion eine Zeitinformation zum Neustart des Elektromotors an die Steuereinheit auszugeben.

Gemäß einer zweckmäßigen Ausgestaltung kann die Vorrichtung weitere Mittel zur Durchführung des oben und nachfolgend beschriebenen Verfahrens umfassen.

Weitere Vorteile, Einzelheiten und Weiterbildungen der Erfindung ergeben sich aus der nachfolgenden Beschreibung eines Ausführungsbeispiels in Verbindung mit den Zeichnungen. Es zeigen:
- Fig. 1: eine schematische Darstellung einer erfindungsgemäßen Vorrichtung zum rechnergestützten Betrieb eines Elektromotors;
- Fig. 2: eine schematische Darstellung einer Visualisierung von prognostizierten Temperaturverläufen zur Bestimmung einer Zeitinformation zum Neustart des Elektromotors, wobei keiner der prognostizierten Temperaturverläufe für einen Neustart des Elektromotors geeignet ist;
- Fig. 3: die um eine Mehrzahl von prognostizierten Temperaturverläufen ergänzte Visualisierung aus Fig. 2;
- Fig. 4: eine Visualisierung des in Fig. 3 gezeigten Temperatur-Zeit-Diagramms, wobei einer der in Fig. 3 gezeigten prognostizierten Temperaturverläufe zur weiteren Analyse ausgewählt ist;
- Fig. 5: ein Temperatur-Zeit-Diagramm, in dem schematisch anhand eines ausgewählten prognostizierten Temperaturverlaufs die Bestimmung eines Gütemaßes illustriert ist;
- Fig. 6: einen vorgegebenen Farbraum zur Bestimmung des Farbverlaufs einer zu erzeugenden Farbskala;
- Fig. 7: eine mit Hilfe des in Fig. 6 gezeigten Farbraums erzeugte Farbskala;
- Fig. 8: ein Temperatur-Zeit-Diagramm mit einem ausgewählten prognostizierten Temperaturverlauf bei gegebener oberer und unterer Temperaturschranke; und
- Fig. 9: ein Temperatur-Zeit-Diagramm zusammen mit einer sich verändernden Farbskala bei gegenüber der Darstellung in Fig. 8 variierter unterer Temperaturgrenze.

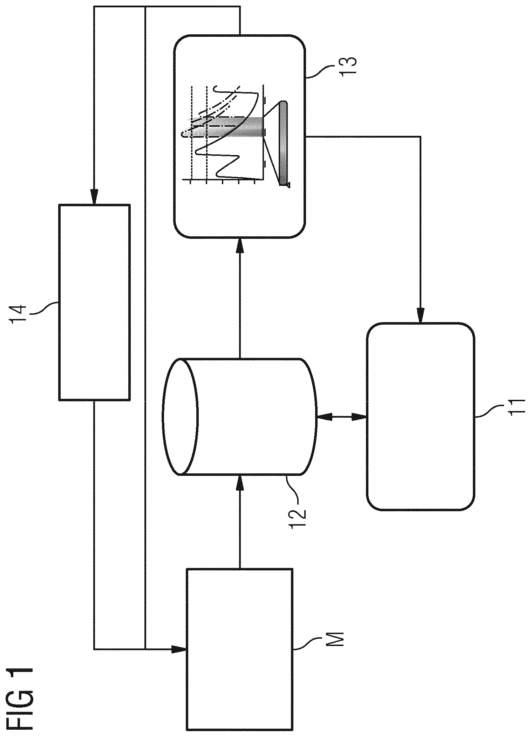

In Fig. 1 ist ein (Elektro-)Motor M gezeigt, dessen nicht näher in der Figur dargestellter drehbarer Rotor durch einen ebenfalls nicht näher dargestellten Schalter ein- bzw. ausgeschaltet werden kann. Die Steuerung des Elektromotors M erfolgt durch eine Freigabeeinheit 14, welche zur Betriebsführung des Elektromotors M dient. Von dem Elektromotor M sind die Motorgeometrie und ggf. die Motorkonfiguration durch einen Modell, z.B. ein CAD-Modell (CAD = Computer Aided Design) bekannt. Ein solches Modell ist in einer herkömmlichen Simulation üblicherweise ein 3D-Modell, so dass die Simulations-Berechnungen rechenintensiv und somit oft nicht echtzeitfähig sind.

Der Elektromotor M ist mit nicht näher dargestellten Sensoren zur Erfassung verschiedener elektrischer und/oder kinetischer physikalischer Größen, z.B. einer Temperatur, einer Drehzahl, Kräfte und dergleichen ausgestattet, wobei die von den Sensoren erfassten Messwerte in einem Speicher 12 abgelegt werden. Von einer mit dem Speicher 12 verbundenen Steuereinheit 11 wird dies aus den Messwerten wenigstens ein an einen fiktiven Realwert angenäherter Temperaturwert mittels eines aus der Motorgeometrie abgeleiteten mathematischen Modells für physikalische Größen des Gesamtzustands des Motors ermittelt. Die erfassten Messwerte und die als Soft-Sensorwerte bezeichneten abgeleiteten Größen werden einer Nutzerschnittstelle 13 zur Visualisierung zugeführt. Die Nutzerschnittstelle 13 umfasst zumindest ein Display und ein Eingabegerät für eine Nutzerinteraktion, kann darüber hinaus jedoch auch über eine nicht näher dargestellte Recheneinheit verfügen. Die Nutzerschnittstelle 13 ist dazu ausgebildet, z.B. in Antwort auf eine Nutzerinteraktion, weitere Soft-Sensorwerte und Prognosen von der Steuereinheit 11 anzufordern. Darüber hinaus ist die Nutzerschnittstelle 13 mit der Freigabeeinheit 14 gekoppelt, um dieser eine Neustartentscheidung für den Elektromotor M zu übertragen. Die Freigabeeinheit 14 führt den Neustart des Elektromotors M zu dem an ihn übertragenen Zeitpunkt aus, indem sie den erwähnten Schalter einschaltet.

Eine technische Anlage, die einen solchen Elektromotor M umfasst, heizt bei jedem Einschaltvorgang auf. Die durch den Einschaltvorgang hervorgerufene Temperaturerhöhung ist dabei weitaus höher als im Normalbetrieb, so dass nach jedem Einschalten eine Temperaturspitze auftritt, die dann im Normalbetrieb langsam wieder absinkt. Bei einem wiederholten Ein- und Ausschalten führt es dazu, dass sich die Temperaturspitzen aufsummieren und infolgedessen eine für den Elektromotor M definierte, maximal zulässige Temperaturgrenze überschritten werden kann. Das Überschreiten dieser zulässigen Temperaturgrenze kann zu Schäden an dem Elektromotor M führen.

Das vorliegende Verfahren ermöglicht eine Entscheidungsfindung, wann der Elektromotor M ohne Risiko in Zukunft wieder eingeschaltet werden kann. Die bislang bei der Verwendung von mathematischen Modellen bestehenden Unsicherheiten können dadurch eliminiert werden. Ein zu langes Warten bis zu einem Neustart des Elektromotors M führt wiederum zu Ausfallzeiten der technischen Anlage und reduziert dadurch deren Effizienz. Dies führt zu einer unwirtschaftlichen Planung.

Das vorliegende Verfahren ermöglicht eine rechnergestützte Bestimmung eines Neustartzeitpunkts, wobei Nutzerpräferenzen und Nutzerwissen zur Ermittlung des Neustartzeitpunkts berücksichtigt werden können. Das Verfahren nutzt dazu eine Visualisierung, die Modelllösungen mit deren Unsicherheiten abbildet. Die Visualisierung ermöglicht eine Nutzerinteraktion, wobei für eine Anzahl an prognostizierten Temperaturverläufen für einen potentiellen Neustart des Elektromotors M ein Gütemaß ermittelt und mit Hilfe einer Farbskala visualisiert wird. In Antwort auf eine über die Nutzerschnittstelle 13 eingegebene Nutzerinteraktion wird eine Zeitinformation zum Neustart des Elektromotors ausgegeben.

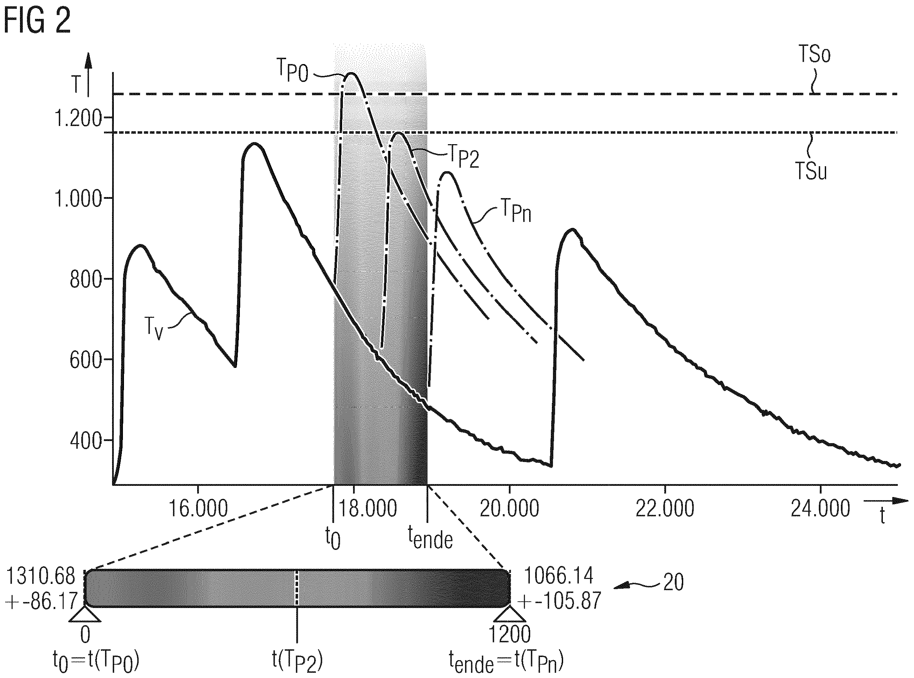

Dieses Vorgehen wird nachfolgend anhand der Fig. 2 bis 9 näher erläutert. Die Fig. 2 bis 4 sowie 8 und 9 zeigen dabei jeweils ein Temperatur-Zeit-Diagramm (T-t-Diagramm), in dem ein historischer Verlauf der Temperatur T_{V} als Linie dargestellt ist. Der historische Temperaturverlauf T_{V} kann durch die Verarbeitung der empfangenen Messdaten und den daraus abgeleiteten Soft-Sensorwerten erfolgen. Mit Hilfe der Soft-Sensorwerte ist es möglich, beispielsweise Temperaturen an solche Stellen des Elektromotors M zu ermitteln, an denen die physikalische Anbringung eines Temperatursensors nicht möglich ist.

In dem Temperatur-Zeit-Diagramm ist ferner ein betrachteter Prognosezeitraum dargestellt, welcher zum Zeitpunkt t₀ beginnt und zum Zeitpunkt t_{ende} endet. Dieser Prognosezeitraum ist in dem Temperatur-Zeit-Diagramm durch einen Farbverlauf hervorgehoben. Der farbig hervorgehobene Prognosezeitraum ermöglicht eine vereinfachte Nutzerinteraktion zur Bestimmung eines optimalen Neustartzeitpunkts.

Durch den Farbverlauf des Prognosezeitraums wird die Eignung eines im Zeitintervall zwischen t₀ und t_{ende} liegenden Zeitpunkts hinsichtlich seiner Eignung für einen Neustart charakterisiert. Bei dem im vorliegenden Ausführungsbeispiel gewählten Farbschema bedeutet beispielsweise eine rote Farbe, dass bei einem Einschalten zu einem Zeitpunkt, der im Bereich roter Farbe liegt, eine obere Temperaturschranke TSo überschritten wird. Die obere Temperaturschranke TSo ist eine Hardwaregrenze des Elektromotors M, bei deren Überschreiten eine Schädigung des Elektromotors M wahrscheinlich ist. Die obere Temperaturschranke TSo liegt im vorliegenden Ausführungsbeispiel bei etwa T = 1250°C.

Daneben ist in dem Temperatur-Zeit-Diagramm eine untere Temperaturschranke TSu eingezeichnet, wobei die Temperatur der unteren Temperaturschranke TSu kleiner als die Temperatur der oberen Temperaturschranke TSo gewählt ist (hier: ca. 1150°C). Die untere Temperaturschranke TSu repräsentiert eine Grenze für einen effizienten Betrieb des Elektromotors M. Neustartzeitpunkte, die derart gewählt sind, dass ein ineffizienter Betrieb des Elektromotors M die Folge ist, sind in dem vorliegenden Farbschema mit blau gekennzeichnet.

Die Grenzen des Prognosezeitraums sind derart gewählt, dass dem Beginn des Prognosezeitraums zum Zeitpunkt t₀ in der Regel ein roter Farbwert zugewiesen ist, während dem Ende des Prognosezeitraums t_{ende} ein blauer Farbwert zugewiesen ist. Entsprechend des gewählten Farbschemas ergibt sich zwischen diesen Farben ein Farbverlauf, der im vorliegenden Ausführungsbeispiel von rot über orange, gelb, grün zu blau übergeht. Ein für einen Neustart geeigneter Neustartzeitpunkt würde z.B. durch einen grünen Farbwert repräsentiert werden. Ein geeigneter Neustartzeitpunkt ist ein Zeitpunkt innerhalb des Prognosezeitraums (d.h. ein Zeitpunkt zwischen t₀ und tende), bei dem ein Temperaturmaximum des prognostizierten Temperaturverlaufs die obere Temperaturschranke TSo nicht überschreitet und die untere Temperaturschranke TSu nicht unterschreitet.

Der in dem Prognosezeitraum des Temperatur-Zeit-Diagramms dargestellte Farbverlauf ist darüber hinaus in einer linearen Farbskala 20 vergrößert dargestellt. In dieser unterhalb des Temperatur-Zeit-Diagramms dargestellten Farbskala 20 ist aufgrund ihrer vergrößerten Darstellung der Farbübergang für eine Nutzerinteraktion vergrößert und damit leichter wahrnehmbar. Die Farbskala 20 beginnt zum Zeitpunkt t₀ und endet zum Zeitpunkt t_{ende}.

In dem Temperatur-Zeit-Diagramm der Fig. 2 sind beispielhaft drei prognostizierte Temperaturverläufe T_{P0}, T_{P2} und T_{Pn} eingezeichnet. Der Neustartzeitpunkt des prognostizierten Temperaturverlaufs T_{P0} ist zum Zeitpunkt t(T_{P0}) (vergleiche Farbskala 20), der Neustartzeitpunkt des prognostizierten Temperaturverlaufs T_{P2} ist zum Zeitpunkt t(T_{P2}) (siehe Farbskala 20) und der Neustartzeitpunkt des prognostizierten Temperaturverlaufs T_{Pn} liegt am Ende des betrachteten Prognosezeitraums t(T_{Pn}) = t_{ende} .

In der Farbskala 20 sind die jeweiligen Neustartzeitpunkte t(T_{Pi}) (i mit = 0,2,n) jeweils als senkrechte durchbrochene Linien dargestellt, so dass ohne weiteres erkennbar ist, in welchem Bereich des Farbverlaufs der jeweilige Neustartzeitpunkt t(T_{Pi}) liegt. Wie unschwer zu erkennen ist, liegt der Neustartzeitpunkt t(_{P0}) des prognostizierten Temperaturverlaufs T_{P0} in einem roten Farbwert (d.h. in der Farbskala ganz links liegend), da der Maximalwert des prognostizierten Temperaturverlaufs oberhalb der oberen Temperaturschranke TSo liegt. Hierdurch wäre die Gefahr einer Beschädigung durch Überhitzung gegeben. Der Neustartzeitpunkt t(T_{Pn}) des prognostizierten Temperaturverlaufs T_{Pn} weist einen blauen Farbwert (d.h. in der Farbskala ganz links liegend) auf, da dessen maximaler Temperaturwert unterhalb der unteren Temperaturschranke TSu liegt. Hierdurch wäre ein nicht effizienter Betrieb des Elektromotors gegeben. Demgegenüber liegt der Neustartzeitpunkt t(T_{P2}) des prognostizierten Temperaturverlaufs T_{P2} bei einem Farbwert, der eine Mischfarbe zwischen grün und blau annimmt. Dies bedeutet, der prognostizierte Temperaturverlauf wird zwar die obere Temperaturschranke TSo nicht überschreiten, scheint aber zu einem ineffizienten Betrieb zu führen. Dies kann auch daran erkannt werden, dass das Temperaturmaximum des prognostizierten Temperaturverlaufs T_{P2} an der Grenze oder knapp unterhalb der unteren Temperaturschranke TSu liegt.

Die Farbskala 20 ermöglicht somit eine intuitive und einfache Einsetzung, ob ein rechnergestützt ermittelter prognostizierter Temperaturverlauf einen geeigneten oder ungeeigneten Neustartzeitpunkt aufweist.

Grundsätzlich kann die in Fig. 2 gezeigte Farbskala 20 von einem Nutzer dazu verwendet werden, aus den visualisierten prognostizierten Temperaturverläufen T_{Pi}, wobei i = 1...n, einen geeignet erscheinenden prognostizierten Temperaturverlauf mittels einer Nutzerinteraktion auszuwählen, so dass von der Nutzerschnittstelle 13 dessen Startwert t(T_{Px}) zum Neustart des Elektromotors M ausgegeben wird. Die Farbskala 20 dient primär dazu, die Nutzerinteraktion zu erleichtern. Die Bestimmung, welche prognostizierten Temperaturverläufe T_{Pi} und die damit verbundenen Neustartzeitpunkte t(T_{Pi}) werden grundsätzlich rechnergestützt bestimmt, wobei geeignete prognostizierte Temperaturverläufe T_{Pi} und die zugeordneten Neustartzeitpunkte t(T_{Pi}) in entsprechender Weise gekennzeichnet werden.

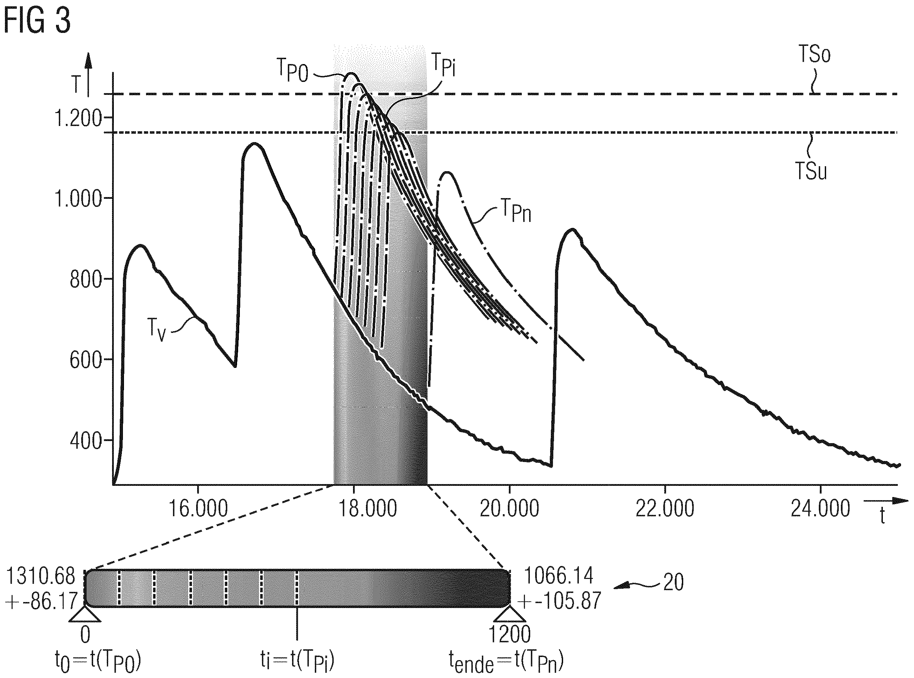

Bei den in Fig. 2 gezeigten prognostizierten Temperaturverläufen T_{P0}, T_{P2} und T_{Pn} konnte kein geeigneter Neustartzeitpunkt ermittelt werden. Mit Hilfe einer Nutzerinteraktion kann ein Nutzer daher die Bestimmung weiterer prognostizierter Temperaturverläufe T_{Pi} initiieren. Dies ist schematisch in Fig. 3 dargestellt, bei der in dem betrachteten Prognosezeitraum eine Vielzahl an prognostizierten Temperaturverläufen T_{Pi} in den Temperatur-Zeit-Diagramm dargestellt sind. An welcher Stelle die prognostizierten Temperaturverläufe T_{Pi} erstellt werden, kann dadurch beeinflusst werden, dass mit Hilfe einer Nutzerinteraktion, z.B. unter Verwendung eines Eingabegeräts (z.B. Maus), in der linearen Farbskala 20 eine entsprechende Interaktion durchgeführt wird. Beispielsweise kann der Nutzer hierzu in der Farbskala einen Farbwert auswählen und dadurch die Erzeugung eines prognostizierten Temperaturverlaufs zum entsprechenden Neustartzeitpunkt initiieren. An den Stellen, an denen eine Auswahl durch den Nutzer getroffen wurde, wird dann ein jeweiliger prognostizierter Temperaturverlauf T_{Pi} erstellt. Der Einfachheit halber sind sowohl in dem Temperatur-Zeit-Diagramm als auch in der linearen Farbskala 20 lediglich ein einziger der prognostizierten Temperaturverläufe allgemein mit T_{Pi} gekennzeichnet, dessen Neustartzeitpunkt in der linearen Farbskala 20 bei tᵢ = t(T_{Pi}) liegt.

Durch das Hinzufügen eines oder mehrerer weiterer prognostizierter Temperaturverläufe T_{Pi} erfolgt eine Neubestimmung des Farbverlaufs. Hierzu wird für jeden, einem prognostizierten Temperaturverlauf zugeordneten Neustartzeitpunkt tᵢ ein Gütemaß berechnet, welches eine Mischfarbe aus dem verwendeten vorgegebenen Farbraum ist. Dieses Vorgehen wird weiter unten im Detail beschrieben. Darüber hinaus folgt eine Neubestimmung des Farbverlaufs zwischen jeweils zwei benachbarten Neustartzeitpunkten der zugeordneten prognostizierten Temperaturverläufe. Je mehr prognostizierte Temperaturverläufe erstellt wurden, desto präziser kann der Farbverlauf zwischen zwei benachbarten Neustartzeitpunkten berechnet werden. Dadurch ergibt sich einerseits für den Nutzer eine eindeutigere Information über die Eignung als Neustartzeitpunkt. Andererseits wird ähnlich einem iterativen Optimierungsverfahrens durch stetige Annäherung die rechnergestützte Bestimmung geeigneter Neustartzeitpunkte ermöglicht.

Das Prognostizieren eines jeweiligen Temperaturverlaufs mit einem zugeordneten Neustartzeitpunkt ist abhängig vom Gesamtzustand des Elektromotors M und/oder der Konfiguration des Elektromotors. Dabei wird ein Abkühlzeitraum zur Reduzierung der thermischen Belastung des Elektromotors ermittelt, wobei der Abkühlzeitraum die Zeitdauer zwischen dem prognostizierten Neustartzeitpunkt und dem Beginn des Prognosezeitraums, d.h. t₀, ermittelt wird. Der angenäherte Temperaturwert zum ermittelten Neustartzeitpunkt resultiert aus wenigstens einem Soft-Sensorwert und/oder den zuvor ermittelten Messwerten. Der angenäherte Temperaturwert kann dann einem Startwert zugeordnet werden, der den Neustartzeitpunkt für den prognostizierten Temperaturverlauf darstellt.

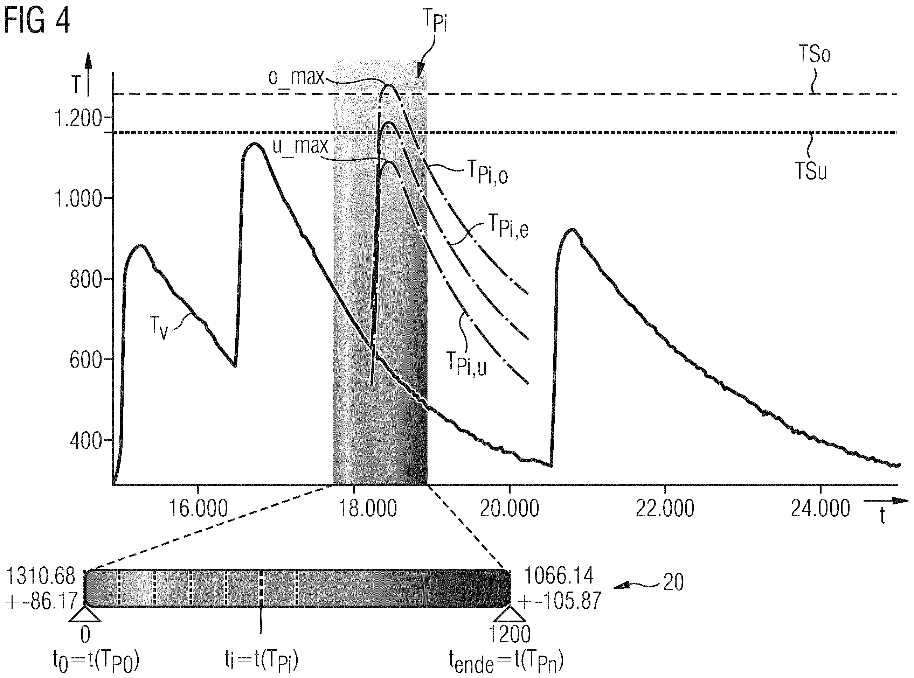

Je nachdem, wie viele prognostizierte Temperaturverläufe T_{Pi} in dem Temperatur-Zeit-Diagramm dargestellt werden, ist es unter Umständen schwierig für einen Nutzer, zu erfassen, welcher der prognostizierten Zeitverläufe einen geeigneten Neustartzeitpunkt zum Neustart des Elektromotors M aufweist. Zu diesem Zweck kann der Nutzer mittels einer Interaktion in der linearen Farbskala 20 einen der prognostizierten Temperaturverläufe auswählen. Dies erfolgt dadurch, dass beispielsweise mit Hilfe eines Mauszeigers auf einen der prognostizierten Temperaturverlauf zugeordneten gestrichelten Linien geklickt wird. In Fig. 4 ist die zweite Linie von rechts im grünen Bereich ausgewählt. Dadurch werden die nicht ausgewählten prognostizierten Temperaturverläufe in dem relevanten Prognosezeitraum des Temperatur-Zeit-Diagramms ausgeblendet. Es wird lediglich der prognostizierte Temperaturverlauf T_{Pi}, der ausgewählt wurde, dargestellt.

Dabei umfasst der prognostizierte Temperaturverlauf T_{Pi} einen erwarteten Temperaturverlauf T_{Pi,e}, einen ersten (oberen) Temperaturverlauf T_{Pi,o} mit einer oberen Konfidenzgrenze und einen zweiten (unteren) Temperaturverlauf T_{Pi,u} mit einer unteren Konfidenzgrenze. Der erwartete Temperaturverlauf T_{Pi,e} entspricht dem Temperaturverlauf, der unter Zugrundelegung der üblichen Prognoseermittlung resultieren würde. Der erste und der zweite Temperaturverlauf repräsentieren mögliche Abweichungen des erwarteten Temperaturverlaufs nach oben und unten. Dabei ist gut zu erkennen, dass ein Temperaturmaximum o_max des ersten (oberen) Temperaturverlaufs T_{Pi,o} oberhalb der oberen Temperaturschranke TSo zum Liegen kommt. Ein unteres Temperaturmaximum u_max des zweiten (unteren) Temperaturverlaufs des prognostizierten Temperaturverlaufs T_{Pi} liegt demgegenüber unterhalb der unteren Temperaturschranke TSu. Obwohl das Temperaturmaximum des erwarteten Temperaturverlaufs T_{Pi,e} zwischen der oberen und der unteren Temperaturschranke liegt, wäre der ausgewählte prognostizierte Temperaturverlauf T_{Pi} aufgrund des Überschreitens der oberen Temperaturschranke TSo mit seiner oberen Konfidenzgrenze als Neustartzeitpunkt nicht geeignet. Ein Nutzer, der den Neustartzeitpunkt tᵢ, obwohl dieser einen Farbwert im grünen Bereich aufweist, auswählen würde, würde daher mit hoher Wahrscheinlichkeit einen ineffizienten Start durchführen. Da die rechnergestützte Bestimmung die obere und untere Konfidenzgrenze für jeden prognostizierten Temperaturverlauf T_{Pi} automatisch berücksichtigt, würde der hier gezeigte ausgewählte prognostizierte Temperaturverlauf T_{Pi} nicht als geeigneter Neustartzeitpunkt vorgeschlagen werden.

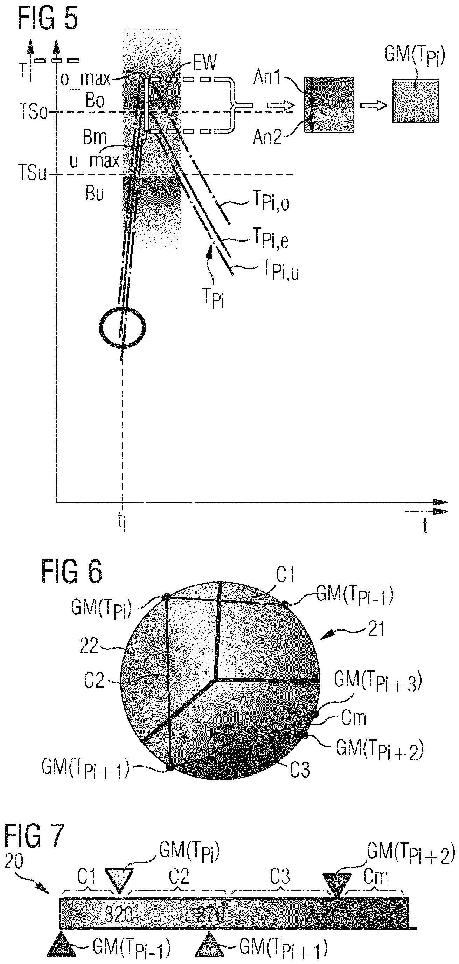

Für die rechnergestützte Bestimmung des Gütemaßes und des damit verbundenen Farbwerts wird ein Prognosebereich EW verarbeitet, der sich aus der Differenz des Temperaturmaximums o_max des ersten Temperaturverlaufs T_{Pi,o} und des Temperaturmaximums u_max des zweiten Temperaturverlaufs T_{Pi,u} errechnet. Der Prognosebereich EW ist in dem Temperatur-Zeit-Diagramm der Fig. 5 illustriert.

In diesem Diagramm ist ein Ausschnitt des prognostizierten Temperaturverlaufs T_{Pi} dargestellt. Im Weiteren wird ermittelt, wie der Prognosebereich EW in Relation zu durch die obere Temperaturschranke TSo und die untere Temperaturschranke TSu aufgeteilte Bereiche Bo, Bm und Bu liegt. Mit Bo ist ein oberer Bereich gekennzeichnet, der oberhalb der oberen Temperaturschranke TSo liegt. Bm kennzeichnet einen mittleren Bereich, der zwischen der oberen und der unteren Temperaturschranke TSo und TSu liegt. Der unterhalb der unteren Temperaturschranke TSo liegende untere Bereich ist mit Bu gekennzeichnet. Dem oberen, dem mittleren und dem unteren Bereich Bo, Bm und Bu ist jeweils eine Farbe des vorgegebenen Farbraums zugewiesen. Beispielsweise ist oberen Bereich Bo die Farbe rot, dem mittleren Bereich Bm die Farbe grün und dem unteren Bereich Bu die Farbe blau zugewiesen. Die zugewiesenen Farben sind insbesondere reine Farben eines Kreiswinkels des vorgegebenen Farbraums.

Im Weiteren wird nun ermittelt, mit welchen proportionalen Anteilen der Prognosebereich EW in den jeweiligen Bereich Bo, Bm und Bu liegt. Im hier vorliegenden Ausführungsbeispiel liegt der Prognosebereich EW teilweise im oberen Bereich Bo und teilweise im mittleren Bereich Bm. Beispielsweise wird davon ausgegangen, dass ein Anteil An1 des Prognosebereichs EW zu 2/3 im oberen Bereich Bo und ein Anteil An2 zu 1/3 im mittleren Bereich Bm liegt. Aufgrund der dem oberen Bereich Bo und dem mittleren Bereich Bm zugewiesenen Farben des Farbwinkels des vorgegebenen Farbraums ergibt sich entsprechend der Anteile An1 und An2 eine das Gütemaß repräsentierende Mischfarbe. Beispielsweise ergibt sich durch die Mischung von rot und blau im Verhältnis 2:1 die Farbe orange. Der Farbwert, der sich durch das beschriebene Vorgehen ergibt, liegt auf einem Farbwinkel, d.h. der Kreislinie, des vorgegebenen Farbraums, der exemplarisch in Fig. 6 dargestellt ist.

Das Gütemaß des betrachteten prognostizierten Temperaturverlaufs GM(T_{Pi}), das, wie in Fig. 5 dargestellt, ermittelt wurde, stellt einen Punkt auf dem Farbwinkel 22 des vorgegebenen Farbraums 21 dar, der in Fig. 6 dargestellt ist. Zur Bestimmung der linearen Farbskala 20 wird in der wie oben beschriebenen Weise für einen jeweiligen prognostizierten Temperaturverlauf T_{Pi} sein Gütemaß GM ermittelt und auf dem Farbwinkel 22 des Farbraums 21 eingetragen. In dem in Fig. 6 gezeigten Ausführungsbeispiel sind fünf prognostizierte Temperaturverläufe T_{Pi-1}, T_{Pi}, T_{Pi+1}, T_{Pi+2} und T_{Pi+3} dargestellt. Die jeweils zugeordneten Gütemaße GM(T_{Pi-1}), GM(T_{Pi}), ... sind mit ihren zugeordneten Farbwerten in der linearen Farbskala 20 der Fig. 7 dargestellt. Die sich zwischen zwei benachbarten Gütepunkten GM ergebenden Farbverläufe resultieren aus der jeweils kürzesten Verbindung Cn, wobei n = 1 ... m ist, zwischen den jeweils benachbarten Gütepunkten GM. Die kürzeste Verbindung C1 in Fig. 6 verbindet die Gütemaße GM(T_{Pi-1}) und GM(T_{Pi}). Die Verbindung C2 verbindet die Gütemaße GM(T_{Pi}) und GM(T_{Pi+1}), usw. Die auf der jeweiligen kürzesten Verbindung Cn liegenden Farbwerte stellen den Farbverlauf zwischen den benachbarten Gütemaßen GM in der linearen Farbskala 20 dar.

Es ist ohne weiteres verständlich, dass die Reinheit bzw. Sättigung der Farben bzw. des Farbverlaufs der Farbskala umso größer ist, je größer die Anzahl der ermittelten Gütemaße für prognostizierte Temperaturverläufe T_{Pi} ist. Mit anderen Worten kann die Sättigung der linearen Farbskala und damit die Aussagefähigkeit hinsichtlich eines zu findenden Neustartzeitpunkts erhöht werden, wenn die Anzahl der Prognosen erhöht wird.

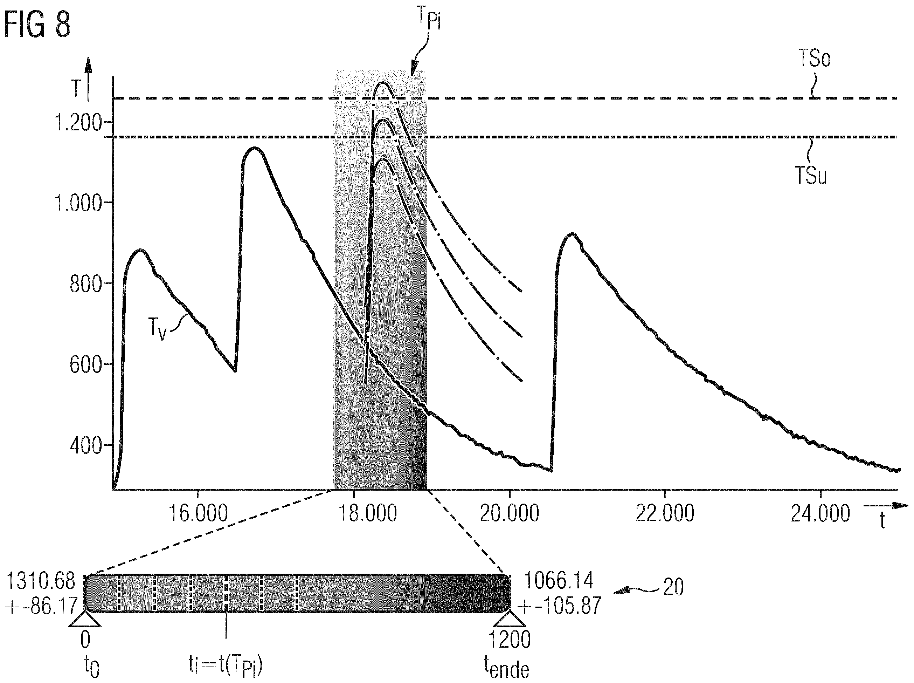

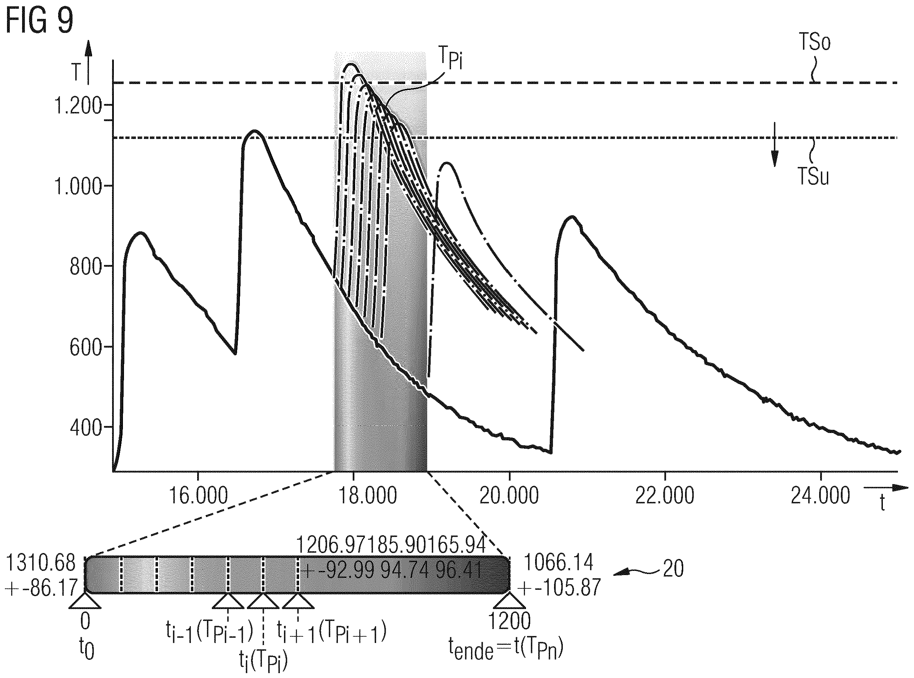

Lässt sich in der so beschriebenen Vorgehensweise nicht wenigstens ein prognostizierter Temperaturverlauf T_{Pu} mit zugehörigem Neustartwert tᵢ finden, bei dem sichergestellt ist, dass die obere Temperaturschranke TSo in keinem Fall überschritten wird und gleichzeitig ein effizienter Betrieb sichergestellt ist, d.h. die untere Temperaturschranke TSu nicht unterschritten wird, so kann durch Variation der oberen und/oder unteren Temperaturschranke TSo bzw. TSu die Konvergenz des Verfahrens erhöht werden. Dies ist schematisch in den Figuren 8 und 9 dargestellt, wobei in Fig. 8 lediglich ein ausgewählter prognostizierter Temperaturverlauf T_{Pi} dargestellt ist, der zwar im grünen Bereich der linearen Farbskala 20 liegt, dessen Konfidenzgrenzen jedoch oberhalb der oberen Temperaturschranke TSo und der unteren Temperaturschranke TSu liegen. Durch beispielsweise Reduktion des Werts der unteren Temperaturschranke TSu lassen sich dann gleich drei mögliche Neustartzeitpunkte tᵢ₋₁(T_{Pi-1}), tᵢ(T_{Pi}) und tᵢ₊₁ (T_{Pi+1}) mit zugehörigen prognostizierten Temperaturprofilen finden, bei denen ein sinnvoller Neustart möglich ist. Die Mehrzahl an möglichen Neustartzeitpunkten wird in der linearen Farbskala 20 beispielsweise durch entsprechende Markierungen (hier: Dreiecke) und Angabe der Zeitdauern seit dem Durchführen der Prognose visualisiert. Durch Auswahl einer der Markierung wird die der Markierung zugeordnete Zeitinformation von der Nutzerschnittstelle an die Freigabeeinheit 14 übertragen und der Elektromotor M wird z.B. 400 s nach dem Durchführen des beschriebenen Verfahrens neu gestartet.

Die lineare Farbskala zeigt durch den Grad der Farbsättigung an, ob eine Entscheidung hinreichend sicher ist bzw. ob genügend Prognosen herangezogen wurden, um eine Bestimmung eines geeigneten Neustartzeitpunkts durchführen zu können. Für den Fall, dass die Farbsättigung zu gering ausfällt, d.h. die auf dem Farbwinkel 22 des vorgegebenen Farbraums 21 benachbart liegenden Punkte zu weit auseinander gelegen sind, kann durch Nutzerinteraktion auf der linearen Farbskala die Erzeugung einer oder mehrerer weiterer prognostizierter Temperaturverläufe initiiert werden. Diese werden dann unmittelbar in der Visualisierung der interaktiven Farbskala berücksichtigt. Nach der rechnergestützten Entscheidungsfindung wird durch Nutzerinteraktion die konkrete Entscheidung für den Neustart und den Zeitpunkt des Neustarts getroffen und an die Freigabeeinheit 14 übermittelt.

## Patentansprüche

1. Verfahren zum rechnergestützten Betrieb eines Elektromotors (M), der während seines Betriebs einer thermischen Belastung durch die Drehbewegung seines Rotors ausgesetzt ist, mit den Schritten:
- Empfangen von während des Betriebs des Elektromotors (M) gemessenen Messdaten, wobei die Messdaten elektrische und/oder kinetische physikalische Größen des Elektromotors (M) sind;
- Ermitteln wenigstens eines an einen fiktiven Realwert angenäherten Temperaturwertes mittels eines aus einer vorgebbaren Motorgeometrie abgeleiteten mathematischen Modells für physikalische Größen des Gesamtzustandes des Motors, sowie aus den empfangenen Messdaten als Eingabedaten;
- Prognostizieren einer Anzahl von Temperaturverläufen (T_{Pi}) mit unterschiedlichen Neustartzeitpunkten (t (T_{Pi})) , wobei die Temperaturverläufe (T_{Pi}) jeweils vom Gesamtzustand des Elektromotors (M) und/oder von der Konfiguration des Elektromotors (M) abhängig sind, zur Definition eines Abkühlzeitraums zur Reduzierung der thermischen Belastung des Elektromotors (M), wobei der angenäherte Temperaturwert, der aus dem wenigstens einen fiktiven Realwert resultiert, als jeweiliger Startwert für einen Neustart in den zu prognostizierenden Temperaturverlauf eingeht;
- Visualisierung des in der Vergangenheit liegenden Temperaturverlaufs (T_{V}) zusammen mit der Anzahl an prognostizierten Temperaturverläufen (T_{Pi}) in einem Zeit-Temperatur-Diagramm, wobei die Anzahl an prognostizierten Temperaturverläufen (T_{Pi}) einen möglichen Neustart des Elektromotors (M) zum jeweiligen Neustartzeitpunkt mit dem jeweils ermittelten Startwert repräsentiert;
- Ermittlung eines jeweiligen Gütemaßes (GM(T_{Pi})) für die Anzahl an prognostizierten Temperaturverläufen (T_{Pi}), wobei das Gütemaß (GM(T_{Pi})) ein Maß für die Effizienz dafür ist, wie gut der Neustartzeitpunkt im Hinblick auf die zu erwartende thermische Belastung und einem Minimum des Abkühlzeitraums ist; und
- Abbilden der Gütemaße (GM(T_{Pi})) auf eine Farbskala (20), welche auf einer Nutzerschnittstelle (13) visuell ausgegeben wird, wobei in Antwort auf eine über die Nutzerschnittstelle (13) eingegebene Nutzerinteraktion eine Zeitinformation zum Neustart des Elektromotors (M) ausgegeben wird.

2. Verfahren nach Anspruch 1,
**dadurch gekennzeichnet, dass** für jeden prognostizierten Temperaturverlauf (T_{Pi}) ein erwarteter Temperaturverlauf (T_{Pi,e}) , ein erster Temperaturverlauf (T_{Pi,ο}) mit einer oberen Konfidenzgrenze und ein zweiter Temperaturverlauf (T_{Pi,u}) mit einer unteren Konfidenzgrenze ermittelt wird.

3. Verfahren nach Anspruch 2,
**dadurch gekennzeichnet, dass** in der Visualisierung der prognostizierten Temperaturverläufe (T_{Pi}) die jeweiligen erwarteten Temperaturverläufe (T_{Pi,e}) dargestellt werden, solange keine Nutzerinteraktion ermittelt wird oder wurde.

4. Verfahren nach Anspruch 2,
**dadurch gekennzeichnet, dass** in der Visualisierung beim Feststellen einer Interaktion, welche eine Auswahl eines der prognostizierten Temperaturverläufe (T_{Pi}) umfasst, dessen erwarteter Temperaturverlauf (T_{Pi,e}) , dessen erster Temperaturverlauf (T_{Pi,ο}) und dessen zweiter Temperaturverlauf (T_{Pi,u}) dargestellt werden.

5. Verfahren nach einem der vorhergehenden Ansprüche, **dadurch gekennzeichnet, dass** eine obere Temperaturschranke (TSo), die eine Hardwaregrenze des Elektromotors (M) repräsentiert, und eine untere Temperaturschranke (TSu), die eine Grenze für einen effizienten Betrieb des Elektromotors (M) ist, festgelegt werden, wobei die jeweiligen Gütemaße (GM(T_{Pi})) für die Anzahl an prognostizierten Temperaturverläufen (T_{Pi}) abhängig von der festgelegten oberen und unteren Temperaturschranke (TSo, TSu) ermittelt werden.

6. Verfahren nach Anspruch 5,
**dadurch gekennzeichnet, dass** die obere und untere Temperaturschranke (TSo, TSu) in der Visualisierung angezeigt und durch eine Nutzerinteraktion in ihrem Betrag veränderbar sind.

7. Verfahren nach einem der vorhergehenden Ansprüche, **dadurch gekennzeichnet, dass** die Anzahl der prognostizierten Temperaturverläufe (T_{Pi}) durch eine Nutzerinteraktion festgelegt wird.

8. Verfahren nach einem der Ansprüche 2 bis 7,
**dadurch gekennzeichnet, dass** für einen jeweiligen prognostizierten Temperaturverlauf (T_{Pi}) ein Prognosebereich (EW) für die Temperatur ermittelt wird, indem die Differenz eines jeweiligen Temperaturmaximums (o_max, u_max) für den ersten und den zweiten Temperaturverlauf, das beim angenommenen Ausschalten des Elektromotors (M) erreicht ist, ermittelt wird.

9. Verfahren nach Anspruch 8,
**dadurch gekennzeichnet, dass** der Prognosebereich (EW) in einen oder mehrere der folgenden Bereiche ragt oder in diesen liegt:
- einen oberen Bereich (Bo), der oberhalb der oberen Temperaturschranke liegt,
- einen mittleren Bereich (Bm), der zwischen der oberen und der unteren Temperaturschranke liegt,
- einen unteren Bereich (Bu), der unterhalb der unteren Temperaturschranke liegt,
wobei sich das Gütemaß (GM(T_{Pi})) aus den jeweiligen Anteilen der Überlappung des Prognosebereichs (EW) mit dem oberen Bereich (Bo) und/oder mittleren Bereich (Bm) und/oder unteren Bereich (Bu) bestimmt.

10. Verfahren nach Anspruch 9,
**dadurch gekennzeichnet, dass** dem oberen, dem mittleren und dem unteren Bereich (Bo, Bm, Bu) jeweils eine Farbe eines vorgegebenen Farbraums (21) zugewiesen ist, wobei die jeweiligen Farben vorgegebene, insbesondere reine, Farben eines Kreiswinkels des vorgegebenen Farbraums sind.

11. Verfahren nach Anspruch 10,
**dadurch gekennzeichnet, dass** das Gütemaß eine Mischfarbe des Kreiswinkels (22) des vorgegebenen Farbraums (22) ist.

12. Verfahren nach einem der Ansprüche 9 bis 11,
**dadurch gekennzeichnet, dass** in der Farbskala (20) der Bereich zwischen zwei benachbarten Gütemaßen (GM(T_{Pi})) ein Farbverlauf ist, der sich aus den Farben einer kürzesten Verbindung (Cn) der auf dem Farbwinkel des vorgegebenen Farbraums (21) liegenden Mischfarben des Gütemaßes ergibt.

13. Verfahren nach einem der Ansprüche 9 bis 12,
**dadurch gekennzeichnet, dass** die Zeitinformation zum Neustart des Elektromors (M) anhand der Farbsättigung der Farbe des mittleren Bereichs (Bm) bestimmt wird.

14. Computerprogramm mit Mitteln zur Durchführung des Verfahrens nach einem der Verfahrensansprüche 1 bis 13, wenn das Computerprogramm auf einer Vorrichtung nach Anspruch 15 zur Ausführung gebracht wird.

15. Vorrichtung zum rechnergestützten Betrieb eines Elektromotors (M), der während seines Betriebs einer thermischen Belastung durch die Drehbewegung seines Rotors ausgesetzt ist, umfassend:
eine Steuereinheit, die dazu ausgebildet ist,
- von während des Betriebs des Elektromotors (M) gemessene Messdaten zu empfangen, wobei die Messdaten elektrische und/oder kinetische physikalische Größen des Elektromotors (M) sind;
- wenigstens einen an einen fiktiven Realwert angenäherten Temperaturwert zu ermitteln mittels eines aus einer vorgebbaren Motorgeometrie (G) abgeleiteten mathematischen Modells für physikalische Größen des Gesamtzustandes des Motors sowie aus den empfangenen Messdaten als Eingabedaten;
- eine Anzahl von Temperaturverläufen (T_{Pi}) mit unterschiedlichen Neustartzeitpunkten (t(T_{Pi})) zu prognostizieren, wobei die Temperaturverläufe (T_{Pi}) jeweils vom Gesamtzustand des Elektromotors (M) und/oder von der Konfiguration des Elektromotors (M) abhängig sind, zur Definition eines Abkühlzeitraums zur Reduzierung der thermischen Belastung des Elektromotors (M), wobei der angenäherte Temperaturwert, der aus dem wenigstens einen fiktiven Realwert resultiert, als jeweiliger Startwert für einen Neustart in den zu prognostizierenden Temperaturverlauf eingeht;
- ein jeweiliges Gütemaß (GM(T_{Pi})) für die Anzahl an prognostizierten Temperaturverläufen (T_{Pi}) zu ermitteln, wobei das Gütemaß (GM(T_{Pi})) ein Maß für die Effizienz dafür ist, wie gut der Neustartzeitpunkt (t(T_{Pi})) im Hinblick auf die zu erwartende thermische Belastung und einem Minimum des Abkühlzeitraums ist; und
- die Gütemaße (GM) auf einer Farbskala abzubilden;
eine Nutzerschnittstelle (13), die dazu ausgebildet ist,
- den in der Vergangenheit liegenden Temperaturverlauf (T_{Pi}) zusammen mit der Anzahl an prognostizierten Temperaturverläufen in einem Zeit-Temperatur-Diagramm zu visualisieren, wobei die Anzahl an prognostizierten Temperaturverläufen (T_{Pi}) einen möglichen Neustart des Elektromotors (M) zum jeweiligen Neustartzeitpunkt (t(T_{Pi})) mit dem jeweils ermittelten Startwert repräsentiert;
- die Farbskala (20) auf der Nutzerschnittstelle (13) visuell auszugeben und in Antwort auf eine über die Nutzerschnittstelle (13) eingegebene Nutzerinteraktion eine Zeitinformation zum Neustart des Elektromotors (M) an die Steuereinheit auszugeben.

## Claims

1. Method for the computer-assisted operation of an electric motor (M) which is subjected, during its operation, to a thermal loading by the rotational motion of its rotor, having the steps:
- receiving measurement data measured during the operation of the electric motor (M), wherein the measurement data are electrical and/or kinetic physical variables of the electric motor (M);
- determining at least one temperature value, approximated to a virtual real value, by means of a mathematical module, derived from a predefineable motor geometry, for physical variables of the overall state of the motor, and from the received measurement data as input data;
- predicting a number of temperature profiles (T_{Pi}) with different restart times (t(T_{Pi})), wherein the temperature profiles (T_{Pi}) are each dependent on the overall state of the electric motor (M) and/or on the configuration of the electric motor (M), in order to define a cooling time period for reducing the thermal loading on the electric motor (M), wherein the approximated temperature value, which results from the at least one virtual real value, is input as a respective starting value for a restart into the temperature profile which is to be predicted;
- displaying the temperature profile (T_{V}), which lies in the past, together with the number of predicted temperature profiles (T_{Pi}) in a time/temperature diagram, wherein the number of predicted temperature profiles (T_{Pi}) represents a possible restart of the electric motor (M) at the respective restart time with the respectively determined starting value;
- determining a respective quality measure (GM(T_{Pi})) for the number of predicted temperature profiles (T_{Pi}) , wherein the quality measure (GM(T_{Pi})) is a measure of the efficiency of how good the restart time is with respect to the expected thermal loading and a minimum of the cooling time period; and
- mapping the quality measures (GM(T_{Pi})) onto a color scale (20) which is visually output at a user interface (13), wherein time information relating to the restart of the electric motor (M) is output in response to a user interaction which is input via the user interface (13).

2. Method according to Claim 1,
**characterized in that** an expected temperature profile (T_{Pi,e}), a first temperature profile (T_{Pi,o}) with an upper confidence limit and a second temperature profile (T_{Pi,u}) with a lower confidence limit are determined for each predicted temperature profile (T_{Pi}).

3. Method according to Claim 2,
**characterized in that** in the display of the predicted temperature profiles (T_{Pi}) the respective expected temperature profiles (T_{Pi,e}) are displayed as long as no user interaction is or has been determined.

4. Method according to Claim 2,
**characterized in that** when an interaction which comprises a selection of one of the predicted temperature profiles (T_{Pi}) is detected, the expected temperature profile (T_{Pi,e}) thereof, the first temperature profile (T_{Pi,o}) thereof and the second temperature profile (T_{Pi,u}) thereof are displayed in the display.

5. Method according to one of the preceding claims, **characterized in that** an upper temperature threshold (TSo), which represents a hardware limit of the electric motor (M) , and a lower temperature threshold (TSu), which is a limit for an efficient operation of the electric motor (M), are defined, wherein the respective quality measures (GM(T_{Pi})) for the number of predicted temperature profiles (T_{Pi}) are determined as a function of the defined upper and lower temperature thresholds (TSo, TSu).

6. Method according to Claim 5,
**characterized in that** the upper and lower temperature thresholds (TSo, TSu) are displayed in the display and can be changed in their absolute value by a user interaction.

7. Method according to one of the preceding claims,
**characterized in that** the number of predicted temperature profiles (T_{Pi}) is defined by a user interaction.

8. Method according to one of Claims 2 to 7,
**characterized in that** a prediction range (EW) for the temperature is determined for a respective predicted temperature profile (T_{Pi}) **in that** the difference of a respective temperature maximum (o max, u max) is determined for the first and second temperature profiles, which temperature maximum (o_max, u max) is reached when the assumed switching-off of the electric motor (M) occurs.

9. Method according to Claim 8,
**characterized in that** the prediction range (EW) projects into one or more of the following ranges or lies in said ranges:
- an upper range (Bo), which lies above the upper temperature threshold,
- a middle range (Bm), which lies between the upper and the lower temperature thresholds,
- a lower range (Bu), which lies below the lower temperature threshold,
wherein the quality measure (GM(T_{Pi})) is determined from the respective portions of the overlapping of the prediction range (EW) with the upper range (Bo) and/or the middle range (Bm) and/or lower range (Bu).

10. Method according to Claim 9,
**characterized in that** the upper, middle and lower ranges (Bo, Bm, Bu) are each assigned a color of a predefined color space (21), wherein the respective colors are predefined, in particular pure, colors of a central angle of the predefined color space.

11. Method according to Claim 10,
**characterized in that** the quality measure is a mixed color of the central angle (22) of the predefined color space (22).

12. Method according to one of Claims 9 to 11,
**characterized in that** in the color scale (20) the region between two adjacent quality measures (GM(T_{Pi})) is a color gradient which results from the colors of a shortest connection (Cn) of the mixed colors of the quality measure which lie on the color angle of the predefined color space (21).

13. Method according to one of Claims 9 to 12,
**characterized in that** the time information relating to the restart of the electric motor (M) is determined on the basis of the color saturation of the color of the middle range (Bm).

14. Computer program having means for carrying out the method according to one of Method Claims 1 to 13 when the computer program is run on a device according to Claim 15.

15. Device for the computer-assisted operation of an electric motor (M) which is subjected, during its operation, to a thermal loading by the rotational motion of its rotor, comprising:
a control unit which is designed
- to receive measurement data measured during the operation of the electric motor (M), wherein the measurement data are electrical and/or kinetic physical variables of the electric motor (M);
- to determine at least one temperature value, approximated to a virtual real value, by means of a mathematical model, derived from a predefineable motor geometry (G), for physical variables of the overall state of the motor and from the received measurement data as input data;
- to predict a number of temperature profiles (T_{Pi}) with different restart times (t(T_{Pi})), wherein the temperature profiles (T_{Pi}) are each dependent on the overall state of the electric motor (M) and/or on the configuration of the electric motor (M), in order to define a cooling time period for reducing the temperature loading on the electric motor (M), wherein the approximated temperature value, which results from the at least one virtual real value, is input as a respective starting value for a restart into the temperature profile which is to be predicted;
- to determine a respective quality measure (GM(T_{Pi})) for the number of predicted temperature profiles (T_{Pi}), wherein the quality measure (GM(T_{Pi})) is a measure of the efficiency of how good the restart time (t (T_{Pi})) is with respect to the expected thermal loading and a minimum of the cooling time period; and
- to map the quality measures (GM) onto a color scale;
a user interface (13) which is designed
- to display the temperature profile (T_{Pi}), which lies in the past, together with the number of predicted temperature profiles in a time/temperature diagram, wherein the number of predicted temperature profiles (T_{Pi}) represents a possible restart of the electric motor (M) at the respective restart time (t(T_{Pi})) with the respectively determined starting value;
- to output the color scale (20) visually at the user interface (13), and to output time information relating to the restart of the electric motor (M) to the control unit in response to a user interaction which is input via the user interface (13).

## Revendications

1. Procédé pour le fonctionnement assisté par ordinateur d'un moteur électrique (M) qui, pendant son fonctionnement, est soumis à une charge thermique par le mouvement de rotation de son rotor, comprenant les étapes de :
- réception de données de mesure mesurées pendant le fonctionnement du moteur électrique (M), les données de mesure étant des grandeurs électriques et/ou physiques cinétiques du moteur électrique (M) ;
- détermination d'au moins une valeur de température approchée d'une valeur réelle fictive au moyen d'un modèle mathématique dérivé d'une géométrie du moteur pouvant être prédéfinie pour des grandeurs physiques de l'état général du moteur, ainsi que des données de mesure reçues comme données d'entrée ;
- prévision d'un nombre de courbes de température (T_{Pi}) avec différents moments de redémarrage (t(T_{Pi})), les courbes de température (T_{Pi}) étant dépendantes à chaque fois de l'état général du moteur électrique (M) et/ou de la configuration du moteur électrique (M), pour la définition d'une période de refroidissement afin de réduire la charge thermique du moteur électrique (M), la température approchée, qui résulte de la au moins une valeur réelle fictive, entrant comme valeur de départ respective pour un redémarrage dans la courbe de température à prévoir ;
- visualisation de la courbe de température (Tv) se situant dans le passé conjointement avec le nombre de courbes de température prévues (T_{Pi}) dans un diagramme temps-température, le nombre de courbes de température prévues (T_{Pi}) représentant un redémarrage possible du moteur électrique (M) au moment de redémarrage respectif avec la valeur de démarrage déterminée à chaque fois ;
- détermination d'un indice de qualité respectif (GM(T_{Pi})) pour le nombre de courbes de température prévues (T_{Pi}), l'indice de qualité (GM(T_{Pi})) étant un indice d'efficacité pour savoir dans quelle mesure le moment de redémarrage est bon par rapport à la charge thermique à escompter et à un minimum du moment de refroidissement ; et
- représentation de l'indice de qualité (GM(T_{Pi})) sur une échelle de couleurs (20), laquelle est indiquée visuellement sur une interface utilisateur (13), ce par quoi en réponse à une interaction de l'utilisateur entrée via l'interface utilisateur (13), une information de temps au redémarrage du moteur électrique (M) est indiquée.

2. Procédé selon la revendication 1, **caractérisé en ce que** pour chaque courbe de température prédite (T_{Pi}), une courbe de température escomptée (T_{Pi,e}), une première courbe de température (T_{Pi,o}) avec une limite de confiance supérieure et une deuxième courbe de température (T_{Pi,u}) avec une limite de confiance inférieure est déterminée.

3. Procédé selon la revendication 2, **caractérisé en ce que** dans la visualisation des courbes de température prévues (T_{Pi}) sont représentées les courbes de température escomptées respectives (T_{Pi,e}), tant qu'aucune interaction de l'utilisateur n'est ou n'a été déterminée.

4. Procédé selon la revendication 2, **caractérisé en ce que** dans la visualisation lors du constat d'une interaction, laquelle comprend une sélection de l'une des courbes de température prévues (T_{Pi}), la courbe de température escomptée (T_{Pi,e}), la première courbe de température (T_{Pi,o}) et la deuxième courbe de température (T_{Pi,u}) sont représentées.

5. Procédé selon l'une des revendications précédentes, **caractérisé en ce qu'**une limite de température supérieure (TSo) qui représente une limite matérielle du moteur électrique (M), et une limite de température inférieure (TSu), qui est une limite pour un fonctionnement efficace du moteur électrique (M), sont fixées, dans lequel les indices de qualité respectifs (GM(T_{Pi})) pour le nombre de courbes de température prévues (T_{Pi}) sont déterminés en fonction de la limite de température supérieure et inférieure fixée (TSo, TSu).

6. Procédé selon la revendication 5, **caractérisé en ce que** la limite de température supérieure et la limite de température inférieure (TSo, TSu) sont affichées dans la visualisation et peuvent être modifiées dans leur montant par une interaction de l'utilisateur.

7. Procédé selon l'une des revendications précédentes, **caractérisé en ce que** le nombre de courbes de température prévues (T_{Pi}) est fixé par une interaction de l'utilisateur.

8. Procédé selon l'une des revendications 2 à 7, **caractérisé en ce que** pour une courbe de température prévue respective (T_{Pi}) est déterminée une zone de prévision (EW) pour la température, en déterminant la différence d'un maximum de température respectif (o_max, u_max) pour la première et la deuxième courbe de température, qui est atteint lors de l'arrêt supposé du moteur électrique (M).

9. Procédé selon la revendication 8, **caractérisé en ce que** la zone de prévision (EW) s'élève dans une ou plusieurs des zones suivantes ou se situe dans celles-ci :
- une zone supérieure (Bo) qui se situe au-dessus de la limite de température supérieure,
- une zone médiane (Bm) qui se situe entre la limite de température supérieure et la limite de température inférieure,
- une zone inférieure (Bu) qui se situe au-dessous de la limite de température inférieure,
dans lequel l'indice de qualité (GM(T_{Pi})) se détermine à partir des portions respectives du chevauchement de la zone de prévision (EW) avec la zone supérieure (Bo) et/ou la zone médiane (Bm) et/ou la zone inférieure (Bu).

10. Procédé selon la revendication 9, **caractérisé en ce qu'**est attribuée à chaque fois à la zone supérieure, la zone médiane et la zone inférieure (Bo, Bm, Bu), une couleur d'un espace chromatique prédéfini (21), les couleurs respectives étant des couleurs prédéfinies, plus particulièrement pures, d'un angle de cercle de l'espace chromatique prédéfini.

11. Procédé selon la revendication 10, **caractérisé en ce que** l'indice de qualité est une couleur mélangée de l'angle de cercle (22) de l'espace chromatique prédéfini (21).

12. Procédé selon l'une des revendications 9 à 11, **caractérisé en ce que** dans l'échelle des couleurs (20), la zone entre deux indices de couleur contigus (GM(T_{Pi})) est un dégradé de couleurs qui résulte des couleurs d'une liaison la plus courte (Cn) des couleurs mélangées de l'indice de couleur, situées sur l'angle de coloration de l'espace chromatique prédéfini (21).

13. Procédé selon l'une des revendications 9 à 12, **caractérisé en ce que** l'information de temps pour le redémarrage du moteur électrique (M) est déterminée à l'aide de la saturation de couleur de la couleur de la zone médiane (Bm).

14. Programme informatique avec des moyens d'exécution du procédé selon l'une des revendications de procédé 1 à 13, si le programme informatique est mis en œuvre sur un dispositif selon la revendication 15.

15. Dispositif pour le fonctionnement assisté par ordinateur d'un moteur électrique (M) qui, pendant son fonctionnement, est soumis à une charge thermique par le mouvement de rotation de son rotor, comprenant : une unité de commande qui est conçue pour
- recevoir pendant le fonctionnement du moteur électrique (M) des données de mesure mesurées, les données de mesure étant des grandeurs électriques et/ou physiques cinétiques du moteur électrique (M) ;
- déterminer au moins une valeur de température approchée d'une valeur réelle fictive au moyen d'un modèle mathématique dérivé d'une géométrie du moteur (G) pouvant être prédéfinie pour des grandeurs physiques de l'état général du moteur, ainsi que des données de mesure reçues comme données d'entrée ;
- prévoir un nombre de courbes de température (T_{Pi}) avec différents moments de redémarrage (t(T_{Pi})), les courbes de température (T_{Pi}) étant dépendantes à chaque fois de l'état général du moteur électrique (M) et/ou de la configuration du moteur électrique (M), pour la définition d'une période de refroidissement afin de réduire la charge thermique du moteur électrique (M), la température approchée qui résulte de la au moins une valeur réelle fictive entrant comme valeur de départ respective pour un redémarrage dans la courbe de température à prévoir ;
- déterminer un indice de qualité respectif (GM(T_{Pi})) pour le nombre de courbes de température prévues (T_{Pi}), l'indice de qualité (GM(T_{Pi})) étant un indice d'efficacité pour savoir dans quelle mesure le moment de redémarrage (t(T_{Pi}) est bon par rapport à la charge thermique à escompter et à un minimum du moment de refroidissement ; et
- représenter l'indice de qualité (GM) sur une échelle de couleurs ;
une interface utilisateur (13) qui est conçue pour
- visualiser la courbe de température (T_{Pi}) se situant dans le passé conjointement avec le nombre de courbes de température prévues dans un diagramme temps-température, le nombre de courbes de température prévues (T_{Pi}) représentant un redémarrage possible du moteur électrique (M) au moment de redémarrage respectif (t(T_{Pi})) avec la valeur de démarrage déterminée à chaque fois ;
- indiquer visuellement l'échelle de couleurs (20) sur l'interface utilisateur (13) et, en réponse à une interaction de l'utilisateur entrée via l'interface utilisateur (13), indiquer à l'unité de commande une information de temps pour le redémarrage du moteur électrique (M).
